# FASCICULE DE BREVET EUROPEEN

(11) **EP 4 564 142 B1**
(45) Date de publication et mention de la délivrance du brevet: **25.02.2026**
(21) Numéro de dépôt: 24214039.0
(22) Date de dépôt: 19.11.2024
(51) Int. Cl.: G06F 3/033, G06F 3/0354, G06F 3/039, B60K 35/10, B60K 35/50, B60K 35/22, B64D 43/00

(54) **SYSTEME D'INTERACTION A DISTANCE AVEC UN MOYEN DE POINTAGE D'UNE IHM D'UN SYSTEME DE VISUALISATION DE COCKPIT D'AERONEF**
FERNINTERAKTIONSSYSTEM MIT EINEM MITTEL ZUR AUSRICHTUNG EINES HMI EINES COCKPIT-ANZEIGESYSTEMS EINES FLUGZEUGS
SYSTEM FOR REMOTE INTERACTION WITH A MEANS FOR POINTING AN HMI OF AN AIRCRAFT COCKPIT VIEWING SYSTEM

(30) Priorité: 28.11.2023 FR 2313193
(43) Date de publication de la demande: 04.06.2025
(73) Titulaire: THALES, 92190 Meudon (FR)
(72) Inventeur: BESNARD, Mathieu, 33700 MERIGNAC (FR); COUDER, Nicolas, 33700 MERIGNAC (FR); MONVOISIN, Emmanuel, 33700 MERIGNAC (FR); PETITDEMANGE, Arnaud, 33700 MERIGNAC (FR); NABHOLZ, Anton, 33700 MERIGNAC (FR)
(74) Mandataire: Atout PI Laplace

(56) Documents cités:
- EP-A1- 0 721 629
- EP-A2- 2 808 763
- EP-B1- 4 092 509

## Description

L'invention porte sur un système d'interaction à distance avec un moyen de pointage d'une IHM d'un système de visualisation de cockpit d'aéronef.

L'invention concerne, de façon générale, la manière d'interagir sur un système de cockpit constitué d'un dispositif d'affichage comportant un grand écran unique ou une pluralité d'écrans disposés essentiellement en planche de bord.

Une interface entre le pilote et le système d'un cockpit d'aéronef est essentiellement constitué d'écrans multifonctions et d'organes de commandes.

Historiquement, les organes de commande étaient séparés des écrans principaux, sous forme de panneaux de contrôle munis de divers interacteurs physiques, comme des Interrupteurs, des sélecteurs rotatifs, ou des touches

Par la suite, ces organes de commande ont été en partie intégrés aux écrans de visualisation, sous la forme de touches de fonction situées tout autour de l'écran, éventuellement complétés par un ou plusieurs rotacteurs.

Toutefois, l'expérience interactive demeure frustrante si on la compare au monde de la micro-informatique, basée sur l'utilisation de fenêtres, menu, icones activables au moyen d'un pointeur.

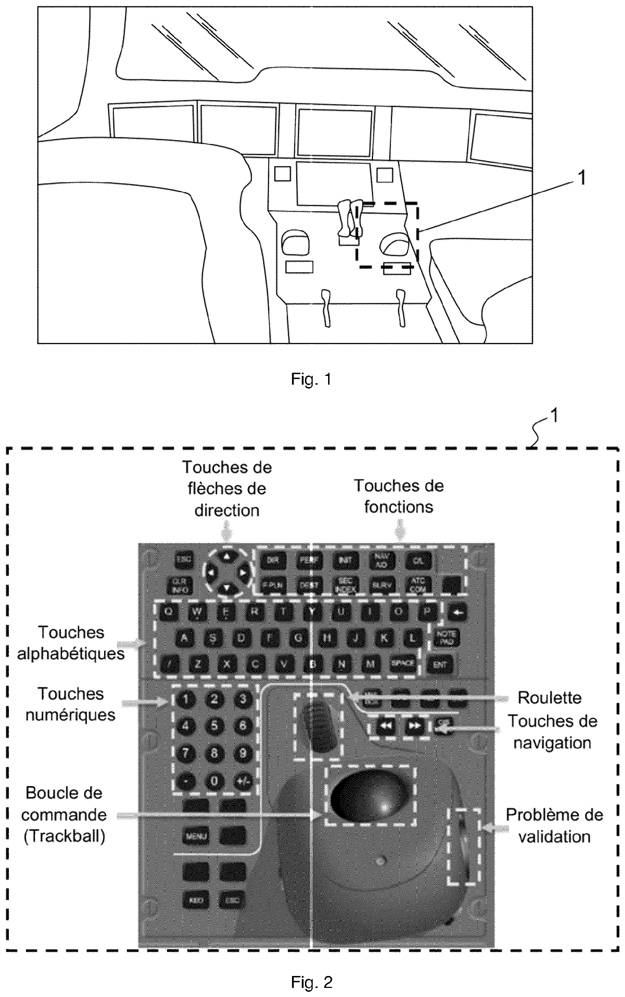

Comme illustré sur les [Fig.1] et [Fig.2], la génération de cockpit actuelle a donc vu l'introduction d'un dispositif d'interaction avec un moyen de pointage fonctionnellement identique à une souris, appelé CCD, pour acronyme de "Control Cursor Device" en langue anglaise, à base de boule de pointage, ou trackball en langue anglaise, et permettant d'interagir directement sur les écrans du cockpit. Un tel dispositif se révèle peu pratique à l'usage, le déplacement d'un pointeur par une trackball étant moins naturel et efficient qu'avec une souris.

Un tel dispositif 1 est représenté en [Fig.1] dans le cockpit, et de manière plus détaillée en [Fig.2].

L'expérience utilisateur d'un tel dispositif dit WIMP pour acronyme de "Windows, Icons, Menus and Pointer" en langue anglaise car basé sur une interface graphique composée de fenêtres ("Windows" en langue anglaise), icones ("lcons" en langue anglaise), menus ("Menus" en langue anglaise) activables au moyen d'un pointeur ("Pointer" en langue anglaise).

A l'usage, un tel dispositif reste frustrant comparé aux tablettes et autre smartphones basés sur une interaction tactile directe sur l'écran.

Récemment, les cockpits d'avions civils se sont vus équipés d'écrans tactiles, ce qui permet une interaction directe et intuitive du pilote et/ou du copilote avec les écrans.

De plus, ces écrans tactiles sont difficilement utilisables en cas de présence de vibrations, ou lorsque le pilote recule son siège en position de vol de croisière.

Néanmoins, dans le cadre d'un cockpit constitué de grands écrans, voire d'un écran unique, il n'est pas possible d'avoir toute la surface d'affichage à portée de main, et encore moins à une distance compatible avec des gestes tactiles.

Dans de rare cas parmi les avions les plus récents, plusieurs écrans tactiles sont utilisés, avec la possibilité d'utiliser également un CCD.

Il est connu le document EP 4092509 B1 qui porte sur un CCD Post Wimp, qui peut avoir pour inconvénient son encombrement. En effet, ce CCD dispose d'une couche supérieure en forme de V. Sur la première partie du V, se trouve un repose main (ou pommeau) et des boutons. La deuxième partie du V qui comporte une surface tactile (touchpad ou touchscreen) dépasse sensiblement de sa zone d'implantation (platine de fixation) et empêche l'implantation d'autres équipements à proximité sous la zone tactile. L'invention résout ce problème d'encombrement car la zone du repose (pommeau), la zone tactile et les boutons sont disposés dans sur une couche en forme de V inversé dont la surface est sensiblement égale à celle de la platine de fixation.

Un but de l'invention, i.e. d'un CCD Post WIMP, est de fournir au pilote et/ou copilote un média compact permettant d'interagir à distance avec les IHM du cockpit, de façon ergonomique et efficace.

Il est également connu le document FR 3083628 B1 qui divulgue un système muni d'accroche doigts qui nécessite d'être très proche des écrans, et la bordure d'accroche doigts oblige la présence d'un espacement entre les différents écrans.

Un autre but de l'invention est de pouvoir être utilisé par le pilote en cas de turbulence quand l'usage des écrans tactiles est difficile (voir impossible) et/ou moins performant).

Un autre but de l'invention est de pouvoir être utilisé confortablement par le pilote ou le co-pilote dans toutes les positions, même en position de siège reculé. La position avancée (proches des IHM du cockpit) est utilisée lors des phases critiques (décollage et atterrissage) alors que la position reculée est utilisée en phase de croisière (synonyme de confort d'assise). Dans cette dernière position, l'intérêt du CCD Post WIMP prend tout son sens car il fournit à l'utilisateur un média permettant d'interagir à distance avec les IHM du cockpit de façon confortable (sans tendre le bras sur les IHM).

Deux CCD Post WIMP sont prévus d'être installés dans le cockpit, 1 par pilote. Il est demandé que le même produit (unique Part Number) puisse être installé pour chaque pilote. Le CCD doit donc être conçu pour être ambidextre. La fonction ambidextre pourrait être utile dans des petits cockpits dans lesquels il n'y aurait qu'un seul CCD Post WIMP entre les deux utilisateurs potentiels.

Un autre but de l'invention est d'être le plus compact possible dans le cockpit.

Un autre but de l'invention est d'avoir une intégration harmonieuse, d'assurer un nettoyage facile, et de démontrer une utilisation intuitive.

Un autre but de l'invention est d'être adaptable à la plupart des cockpits, et d'être ajustable par l'utilisateur de telle sorte que son usage soit ergonomique pour un utilisateur avec la main droite comme la main gauche typiquement dans les petits cockpits où il n'y a la place que pour un seul qui sera utilisé soit par le pilote ou le copilote.

Un but de l'invention est de pallier les problèmes précédemment cités.

Il est proposé, selon un aspect de l'invention, un système d'interaction à distance avec un moyen de pointage d'une IHM d'un système de visualisation de cockpit d'aéronef, comprenant trois couches :
- une couche supérieure en forme de V inversé faisant elle-même office de f pommeau repose-main, comprenant :
   - un module à surface plane sensible au toucher configuré pour interagir sur le moyen de pointage disposé sur une partie avant du V inversé ;
   - au moins un interacteur physique configuré pour interagir avec l'IHM disposé sur une partie arrière du V inversé ;
   - deux rebords latéraux en retrait de la surface supérieure de la couche supérieure, muni chacun d'au moins un interacteur physique
- une couche intermédiaire configurée pour permettre une modification du positionnement de la couche supérieure ; et
- une couche inférieure configurée pour recevoir les connexions filaires d'alimentation électrique et d'échanges de données ;
le système comprenant un module de rejet de paume configuré pour permettre de poser la main ou une partie du bras sur la couche supérieure (2) faisant office de pommeau.

Dans un mode de réalisation, le système comprend une molette en face arrière configurée de sorte à être accessible par l'extrémité des mains de l'utilisateur en utilisation de repose-main.

Selon un mode de réalisation, le module à surface plane sensible au toucher configuré pour interagir sur le dispositif de pointage sur les IHM du cockpit comprend un pavé tactile capacitif multi-contact, ou un écran tactile configuré pour mettre en œuvre un clavier alpha numérique.

Dans un mode de réalisation, le V inversé a une ouverture angulaire du V comprise entre 135° et 179°.

Selon un mode de réalisation, la couche intermédiaire comprend une platine configurée pour être adaptée à sa position d'installation dans le cockpit et à l'aéronef.

Dans un mode de réalisation, la couche intermédiaire comprend un adaptateur de rotation, configuré pour effectuer une rotation de la couche supérieure selon un axe horizontal.

Selon un mode de réalisation, la couche intermédiaire comprend un adaptateur de rotation, configuré pour effectuer une rotation des éléments disposés au-dessus de la platine, de manière solidaire, selon un axe vertical.

Dans un mode de réalisation, le module à surface plane sensible au toucher est un pavé tactile capacitif multi-contact muni d'un dispositif de rétroéclairage, par exemple à micro-LEDs.

Selon un mode de réalisation, la platine comprend des dispositifs cache vis de fixation.

L'invention sera mieux comprise à l'étude de quelques modes de réalisation décrits à titre d'exemples nullement limitatifs et illustrés par les dessins annexés sur lesquels :
[Fig.1] illustre schématiquement un système d'interaction à distance avec un moyen de pointage d'un système de visualisation de cockpit d'aéronef muni d'IHM, selon l'état de l'art ;
[Fig.2] illustre schématiquement un trackball d'un système de la [Fig.1], selon l'état de l'art ;
[Fig.3] illustre schématiquement un système d'interaction à distance avec un moyen de pointage d'une IHM d'un système de visualisation de cockpit d'aéronef, selon un aspect de l'invention ;
[Fig.4a], [Fig.4b], [Fig.4c], [Fig.4d], et [Fig.4e] illustrent schématiquement diverses vue du système de la [Fig.3] ;
[Fig.5] illustre schématiquement un mode de réalisation du système de la [Fig.3], comprenant un dispositif de rétroéclairage à micro-LEDs, selon un aspect de l'invention ;
[Fig.6] illustre schématiquement un mode de réalisation dans lequel la platine comprend des dispositifs cache vis de fixation, selon un aspect de l'invention ;
[Fig.7a], [Fig.7b] illustrent schématiquement un mode de réalisation du système de la [Fig.3], permettant une rotation selon un axe horizontal de la couche supérieure, selon un aspect de l'invention ;
[Fig.8a], [Fig8b] illustrent schématiquement un mode de réalisation du système de la [Fig.3], permettant une rotation selon un axe vertical des éléments disposés au-dessus de la platine, selon un aspect de l'invention ;
[Fig.9a] et [Fig.9b] illustrent schématiquement le poser de main et de bras d'un utilisateur, pilote ou copilote, sur le système de la [Fig.3], selon un aspect de l'invention ; et
[Fig.10a] et [Fig.10b] illustrent schématiquement le système de la [Fig.3], en mode touchpad et en mode clavier, selon un aspect de l'invention.

Sur l'ensemble des figures, les éléments ayant des références identiques sont similaires.

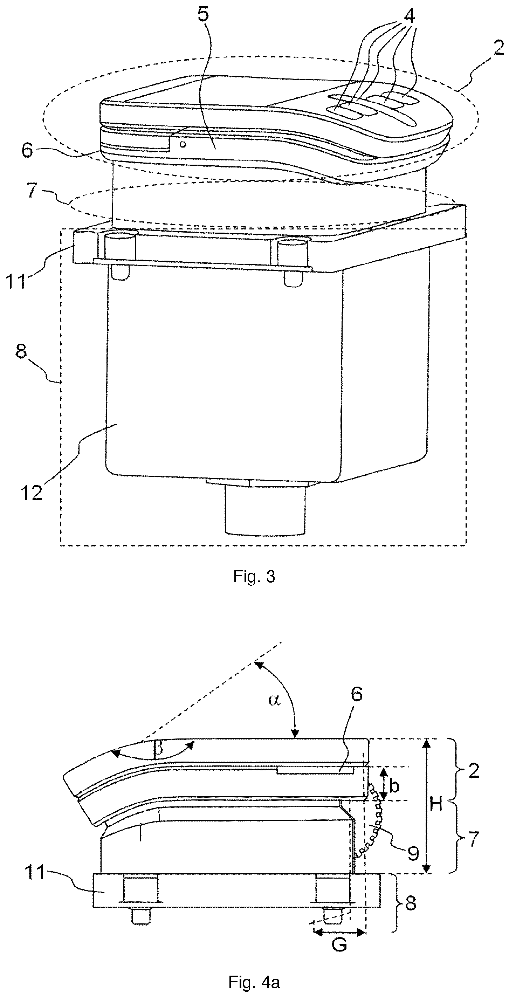

La [Fig.3] illustre schématiquement un système d'interaction à distance avec un moyen de pointage d'une IHM d'un système de visualisation de cockpit d'aéronef aspect de l'invention.

Le système d'interaction à distance avec un moyen de pointage d'une IHM d'un système de visualisation de cockpit d'aéronef, comprenant trois couches :
- une couche supérieure 2 en forme de V inversé faisant elle-même office de pommeau repose-main, comprenant :
   - un module à surface plane 3 sensible au toucher configuré pour interagir sur le moyen de pointage disposé sur une partie avant du V inversé ;
   - au moins un interacteur physique 4 configuré pour interagir avec l'IHM disposé sur une partie arrière du V inversé ;
   - deux rebords latéraux 5 en retrait de la surface supérieure de la couche supérieure 2, muni chacun d'au moins un interacteur physique 6 ; et
- une une couche intermédiaire 7 configurée pour permettre une modification du positionnement de la couche supérieure 2 ; et
- une couche inférieure 8 configurée pour recevoir les connexions filaires d'alimentation électrique et d'échanges de données;
le système comprenant un module de rejet de paume configuré pour permettre de poser la main ou une partie du bras sur la couche supérieure (2) faisant office de pommeau.

La conception du système en trois couches afin de s'adapter à tous les porteurs et à différents endroits dans le cockpit (piédestal, console centrale voire dans l'accoudoir), tout en assurant une position ergonomique pour l'utilisateur (pilote ou copilote).

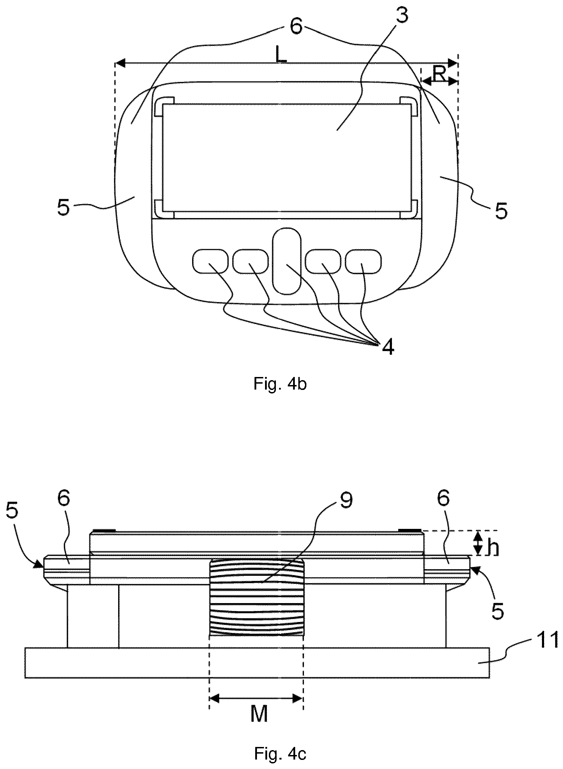

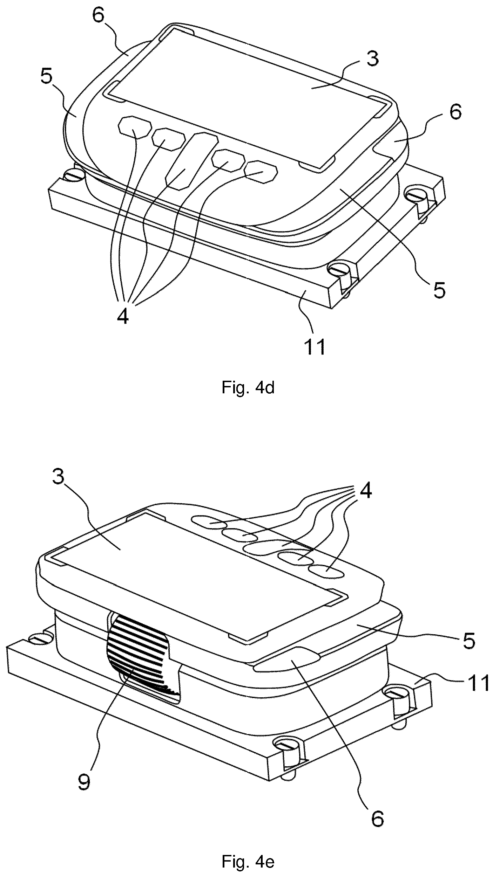

Les [Fig.4a], [Fig.4b], [Fig.4c], [Fig.4d], et [Fig.4e] illustrent schématiquement diverses vues du système de la [Fig.3].

Le V inversé a une ouverture angulaire β du V comprise entre 135° et 179°, et l'inclinaison α de la surface plane 3 sensible au toucher peut être comprise entre 0 et 45° par rapport à l'horizontale.

Le système comprend une molette 9 en face arrière configurée de sorte à être accessible par l'extrémité des mains de l'utilisateur en utilisation de repose-main. Elle est disposée à cheval sur les couches intermédiaire 7 et supérieure 2.

Le module à surface plane 3 sensible au toucher configuré pour interagir sur le dispositif de pointage sur les IHM du cockpit comprend un pavé tactile capacitif multi-contact, ou un écran tactile configuré pour mettre en œuvre un clavier alpha numérique.

L'architecture à trois couches représentée sur les figures a les caractéristiques suivantes :
- Une couche supérieure 2 comprenant :
   - une zone sensible au toucher de dimensions : 30 mm ≤ longueur ≤ 110 mm et 30 mm ≤ largeur ≤ 110 mm et typiquement 108 mm x 48 mm ;
   - des rebords latéraux 5 de largeur R, 10 mm ≤ R ≤ 50 mm, typiquement R = 15 mm et de hauteur b, 10 mm ≤ b ≤ 40 mm, typiquement b = 12 mm ;
   - une molette 9 à l'avant du système et sous la zone sensible au toucher. La molette 9 a une largeur M, 3 mm ≤ M ≤ 50 mm, typiquement M = 30 mm préférentiellement avec un léger galbe et un moletage pour une meilleure accroche ;
- Une couche intermédiaire 7 comprenant :
   - un corps autour de la molette 9 en retrait G par rapport à la couche supérieure 2 afin d'assurer une accroche pour la main de l'utilisateur (notamment en cas de vibrations ou secousses) avec 3 mm ≤ G ≤ 20 mm, et typiquement G = 6 mm.
   - Une couche inférieure 8 ou "back end" en langue anglaise, commune à tous les porteurs, comprenant une platine 11 de fixation avec par exemple quatre vis et un boîtier arrière 12 de section inférieure à celle de la platine 11. La hauteur de la couche inférieure 8 dépend des modèles d'aéronef.

L'ensemble des couches supérieure 2 et intermédiaire 7 a des dimensions de largeur L, 50 mm ≤ L ≤ 150 mm, typiquement L = 140 mm et de hauteur H, 20 mm ≤ H ≤ 100 mm, typiquement H = 40 mm.

Les matériaux utilisés pour sont ceux couramment utilisés pour les équipements de cockpit. Les matériaux autour de la zone sensible au toucher 3 sont non métalliques, en l'espèce en plastique pour ne pas perturber son fonctionnement.

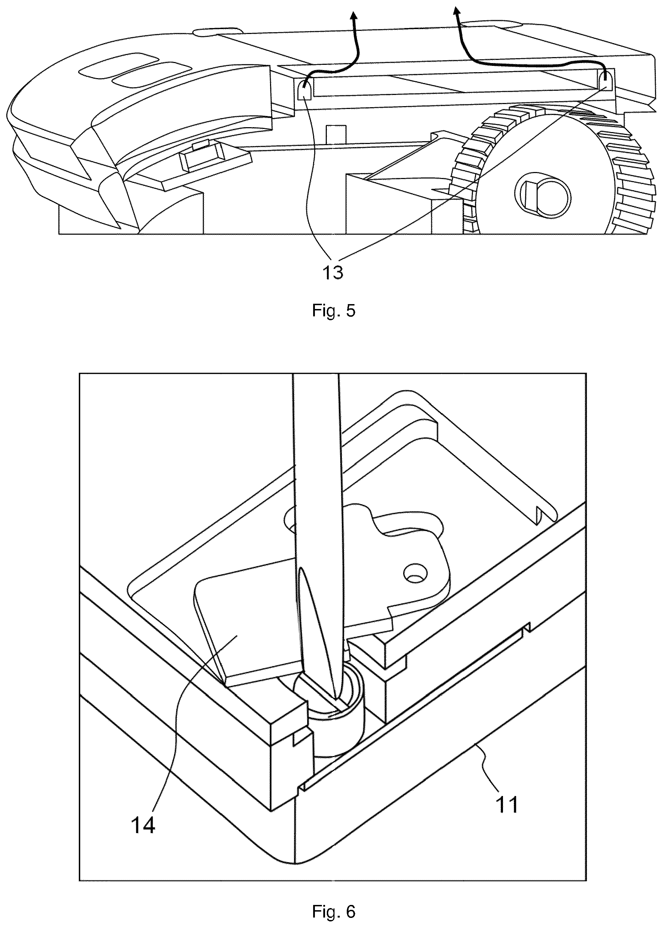

Par exemple, la couche supérieure peut être en plastique avec métallisation (protection EMI) hors zone sensible au toucher 3. En variante, la couche supérieure peut être en aluminium avec insert plastique transparent au-dessus de la zone sensible au toucher 3 avec peinture (photosensible ou fluorescente) ou sticker sérigraphié sur face du dessous. Les touches peuvent ou non être visibles sans rétro-éclairage. Le rétroéclairage du clavier virtuel peut être permis grâce à une source de lumière, comme des micro-LEDs 13, comme illustré sur la [Fig.5].

Comme illustré sur la [Fig.6], la platine 11 comprend des dispositifs 14 cache vis de fixation. Les dispositifs 14 cache vis de fixation améliorent la qualité perçue et représente un avantage du point de vue sanitaire. Le repositionnement d'un cache 14, comme une plaque ou un clapet, au-dessus d'une vis de fixation peut se faire grâce à un ressort ou un aimant permanent de rappel. Le mouvement d'un cache 14 peut être une translation et/ou une rotation associée éventuellement à un louvoiement. Ce système améliore le nettoyage du système sans dégrader la disponibilité, ni la maintenabilité. En effet, l'accès aux vis de fixation ne nécessite pas d'outil spécifique, ni d'outil supplémentaire.

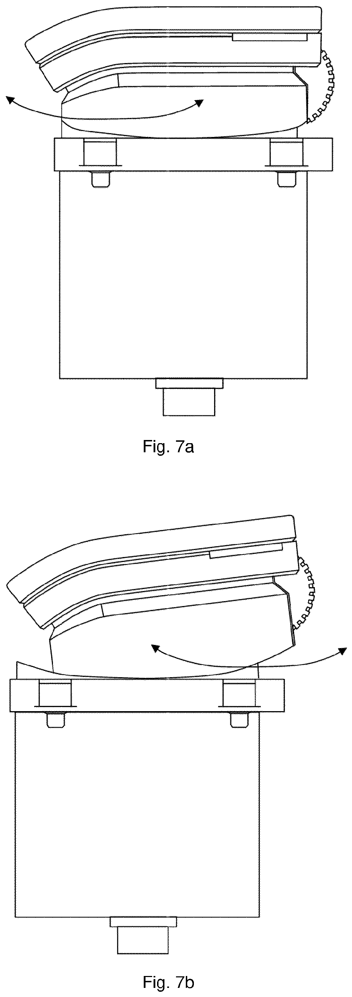

La couche intermédiaire 7 peut comprendre un adaptateur de rotation, configuré pour effectuer une rotation de la couche supérieure 2 selon un axe horizontal, comme représenté par la double flèche sur les [Fig.7a] et [Fig.7b].

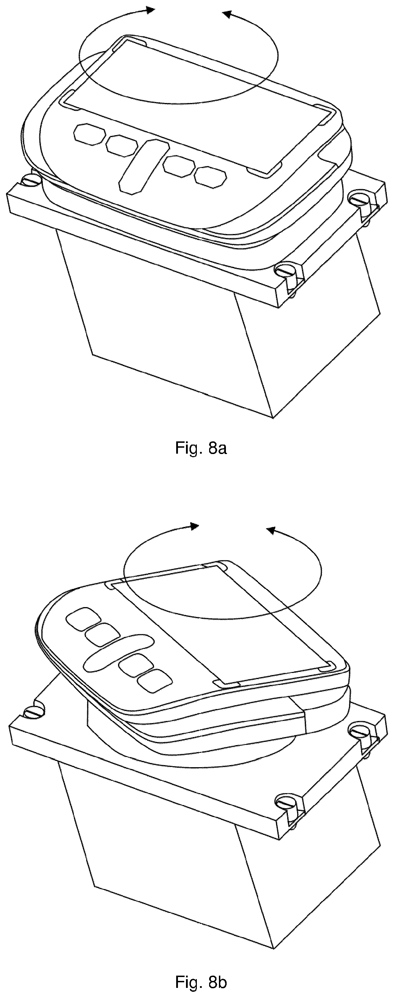

La couche intermédiaire 7 peut comprendre un adaptateur de rotation, configuré pour effectuer une rotation des éléments disposés au-dessus de la platine 11, de manière solidaire, selon un axe vertical, comme représenté par la double flèche sur les [Fig.8a] et [Fig.8b].

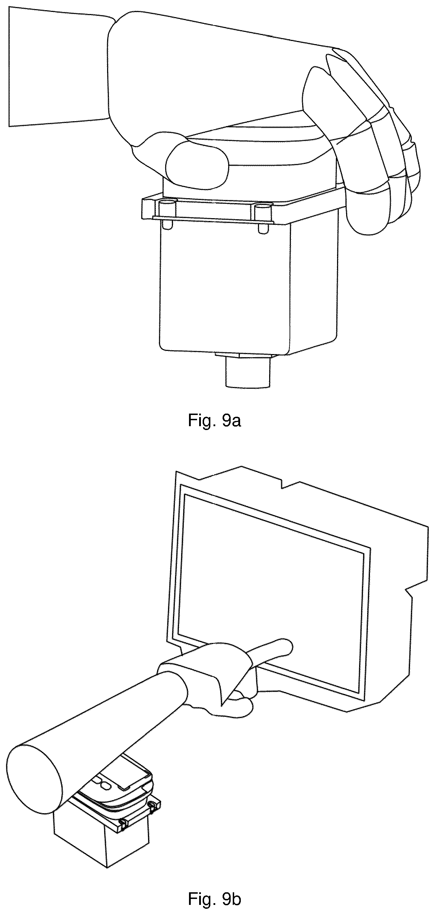

Comme illustré sur les [Fig.9a] et [Fig.9b] La présence d'un module configuré pour mettre en œuvre oune fonction de rejet de paume ou "palm rejection" en langue anglaise, permet de pouvoir poser la main ou une autre partie du bras de l'utilisateur.

Comme illustré sur la [Fig.9b], la présence d'un repose main, assure la stabilité de l'utilisateur dans ses actions d'interaction et limite sa fatigue.

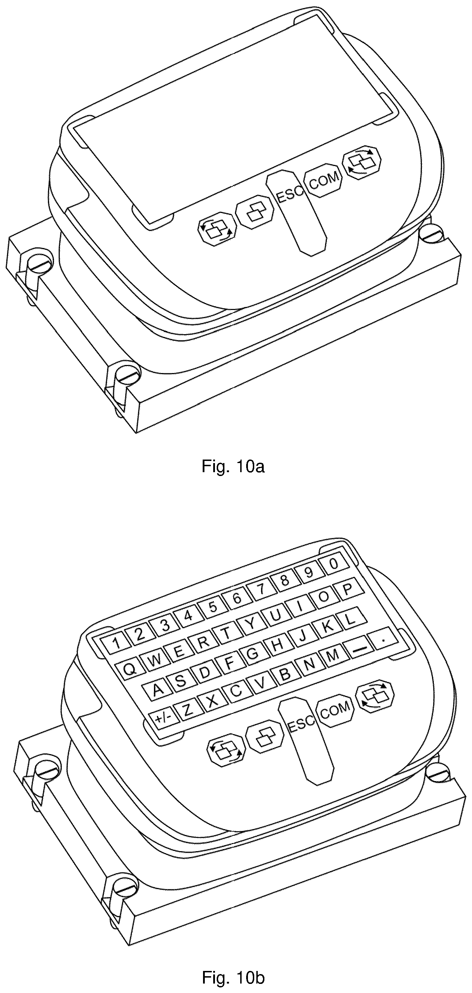

Les [Fig.10a] et [Fig.10b] sont respectivement des exemples de système en mode touchpad et en mode clavier, selon des aspects de l'invention.

## Revendications

1. Système d'interaction à distance avec un moyen de pointage d'une IHM d'un système de visualisation de cockpit d'aéronef, comprenant trois couches :
- une couche supérieure (2) en forme de V inversé faisant elle-même office de pommeau repose-main, comprenant :
- un module à surface plane (3) sensible au toucher configuré pour interagir sur le moyen de pointage disposé sur une partie avant du V inversé ;
- au moins un interacteur physique (4) configuré pour interagir avec l'IHM disposé sur une partie arrière du V inversé ; et
- deux rebords latéraux (5) en retrait de la surface supérieure de la couche supérieure (2), muni chacun d'au moins un interacteur physique (6) ;
- une couche intermédiaire (7) configurée pour permettre une modification du positionnement de la couche supérieure (2) ; et
- une couche inférieure (8) configurée pour recevoir les connexions filaires d'alimentation électrique et d'échanges de données ;
le système comprenant un module de rejet de paume configuré pour permettre de poser la main ou une partie du bras sur la couche supérieure (2) faisant office de pommeau.

2. Système selon la revendication 1, comprenant une molette (9) en face arrière configurée de sorte à être accessible par l'extrémité des mains de l'utilisateur en utilisation de repose-main.

3. Système selon la revendication 1 ou 2, dans lequel le module à surface plane (3) sensible au toucher configuré pour interagir sur le dispositif de pointage sur les IHM du cockpit comprend un pavé tactile capacitif multi-contact, ou un écran tactile configuré pour mettre en œuvre un clavier alpha numérique.

4. Système selon la revendication 1 à 3, dans lequel le V inversé a une ouverture angulaire du V comprise entre 135° et 179°.

5. Système selon l'une des revendications précédentes, dans lequel la couche intermédiaire (7) comprend une platine (11) configurée pour être adaptée à sa position d'installation dans le cockpit et à l'aéronef.

6. Système selon la revendication 5, dans lequel la platine (11) comprend des dispositifs (14) cache vis de fixation.

7. Système selon l'une des revendications précédentes, dans lequel la couche intermédiaire (7) comprend un adaptateur de rotation, configuré pour effectuer une rotation de la couche supérieure (2) selon un axe horizontal.

8. Système selon l'une des revendications précédentes, dans lequel la couche intermédiaire (7) comprend un adaptateur de rotation, configuré pour effectuer une rotation des éléments disposés au-dessus de la platine (11), de manière solidaire, selon un axe vertical.

9. Système selon l'une des revendications précédentes, dans lequel le module à surface plane (3) sensible au toucher est un pavé tactile capacitif multi-contact muni d'un dispositif de rétroéclairage (13).

## Patentansprüche

1. Ferninteraktionssystem mit einem Zeigemittel einer HMI eines Cockpit-Anzeigesystems eines Luftfahrzeugs, drei Schichten umfassend:
- eine obere Schicht (2) in umgekehrter V-Form, die selbst als Handauflageknauf fungiert, umfassend:
- ein berührungsempfindliches Modul mit ebener Oberfläche (3), das konfiguriert ist, um auf dem Zeigemittel zu interagieren, das auf einem vorderen Teil des umgekehrten V angeordnet ist;
- mindestens einen physischen Interaktor (4), der konfiguriert ist, um mit der HMI zu interagieren, der auf einem hinteren Teil des umgekehrten V angeordnet ist; und
- zwei Seitenränder (5), die von der oberen Oberfläche der oberen Schicht (2) zurückgesetzt sind, die jeweils mit mindestens einem physischen Interaktor (6) versehen sind;
- eine Zwischenschicht (7), die konfiguriert ist, um eine Änderung der Positionierung der oberen Schicht (2) zu ermöglichen; und
- eine untere Schicht (8), die konfiguriert ist, um die Drahtverbindungen zur Stromversorgung und zum Datenaustausch aufzunehmen;
wobei das System ein Handflächenabweisungsmodul umfasst, das konfiguriert ist, um zu ermöglichen, die Hand oder einen Teil des Arms auf die obere Schicht (2) zu legen, die als Knauf fungiert.

2. System nach Anspruch 1, umfassend einen Drehknopf (9) an der Rückseite, der konfiguriert ist, um bei Nutzung als Handauflage durch das Ende der Hände des Benutzers erreichbar zu sein.

3. System nach Anspruch 1 oder 2, wobei das berührungsempfindliche Modul mit ebener Oberfläche (3), das konfiguriert ist, um auf dem Zeigemittel auf den HMI des Cockpits zu interagieren, ein kapazitives Mehrkontakt-Tastfeld oder ein Touchscreen umfasst, der konfiguriert ist, um eine alphanumerische Tastatur einzusetzen.

4. System nach Anspruch 1 bis 3, wobei das umgekehrte V eine Winkelöffnung des V aufweist, die zwischen 135° und 179° ist, umfasst.

5. System nach einem der vorstehenden Ansprüche, wobei die Zwischenschicht (7) eine Platine (11) umfasst, die konfiguriert ist, um an ihre Einbauposition im Cockpit und im Luftfahrzeug angepasst zu sein.

6. System nach Anspruch 5, wobei die Platine (11) Abdeckvorrichtungen für Befestigungsschrauben (14) umfasst.

7. System nach einem der vorstehenden Ansprüche, wobei die Zwischenschicht (7) einen Drehadapter umfasst, der konfiguriert ist, um eine Drehung der oberen Schicht (2) entlang einer horizontalen Achse durchzuführen.

8. System nach einem der vorstehenden Ansprüche, wobei die Zwischenschicht (7) einen Drehadapter umfasst, der konfiguriert ist, um eine Drehung der über der Platine (11) fest angeordneten Elemente entlang einer vertikalen Achse durchzuführen.

9. System nach einem der vorstehenden Ansprüche, wobei das berührungsempfindliche Modul mit ebener Oberfläche (3) ein kapazitives Mehrkontakt-Touchpad ist, das mit einer Hintergrundbeleuchtungsvorrichtung (13) versehen ist.

## Claims

1. System for interacting at a distance with a pointing means of an HMI of a viewing system of an aircraft cockpit, comprising three layers:
- an upper layer (2) in the shape of an inverted V, which itself acts as a handrest knob, comprising:
- a module, with a touch-sensitive flat surface (3), configured to interact with the pointing means arranged on a front portion of the inverted V;
- at least one physical interactor (4) configured to interact with the HMI arranged on a rear portion of the inverted V; and
- two lateral edges (5) set back from the upper surface of the upper layer (2), each provided with at least one physical interactor (6);
- an intermediate layer (7) configured to make it possible to modify the positioning of the upper layer (2); and
- a lower layer (8) configured to receive the wired electric power supply and data exchange connections;
the system comprising a palm rejection module configured to make it possible to place the hand or a portion of the arm on the upper layer (2), which acts as a knob.

2. System according to claim 1, comprising a wheel (9) on the rear face configured so as to be able to be accessed by the tips of the hands of the user when used as a handrest.

3. System according to claim 1 or 2, wherein the module, with a touch-sensitive flat surface (3), configured to interact with the pointing device on the HMIs of the cockpit comprises a multi-contact capacitive touchpad, or a touchscreen configured to implement an alphanumeric keyboard.

4. System according to claim 1 to 3, wherein the inverted V has an angular opening of the V of between 135° and 179°.

5. System according to any one of the preceding claims, wherein the intermediate layer (7) comprises a baseplate (11) configured to be adapted to the position in which it is installed in the cockpit and to the aircraft.

6. System according to claim 5, wherein the baseplate (11) comprises fastening screw cover devices (14).

7. System according to any one of the preceding claims, wherein the intermediate layer (7) comprises a rotary adaptor, which is configured to rotate the upper layer (2) about a horizontal axis.

8. System according to any one of the preceding claims, wherein the intermediate layer (7) comprises a rotary adaptor, which is configured to rotate the elements arranged on top of the baseplate (11) jointly about a vertical axis.

9. System according to any one of the preceding claims, wherein the module with a touch-sensitive flat surface (3) is a multi-contact capacitive touchpad provided with a backlighting device (13).
